# EUROPEAN PATENT APPLICATION

(11) **EP 2 924 642 A1**
(43) Date of publication of application: **30.09.2015**
(21) Application number: 15157684.0
(22) Date of filing: 05.03.2015
(51) Int. Cl.: G06Q 30/00

(54) **Electronic information label system with adjustable wake-up update period**

(30) Priority: 28.03.2014 KR 20140037274; 08.04.2014 KR 20140041954; 10.09.2014 KR 20140119612
(71) Applicant: Samsung Electro-Mechanics Co., Ltd., Gyeonggi-do (KR)
(72) Inventor: Yang, Chang Soo, Gyeonggi-do (KR)
(74) Representative: Grünecker Patent- und Rechtsanwälte PartG mbB

(57) **Abstract**

An electronic label system is provided. The electronic label operates in one of two operation modes between a real-time update mode in which merchandise information is updated in real time according to update setting information received from a management server and stored, and a delayed update mode in which merchandise information update is delayed. In the electronic label system, merchandise information may be updated in real time at a necessary point in time with a longer battery change period.

## Description

### CROSS-REFERENCE TO RELATED APPLICATION(S)

This application claims priority from Korean Patent Application Nos. 10-2014-0037274, filed on March 28, 2014, 10-2014-0041954, filed on April 8, 2014, and 10-2014-0119612, filed on September 10, 2014, in the Korean Intellectual Property Office, the entire disclosures of which are incorporated herein by references for all purposes.

### BACKGROUND

### 1. Field

The following description generally relates to a computing system, and more particularly to an electronic information label system that enables management of electronic labels attached to store shelves where merchandise is displayed.

### 2. Description of the Related Art

Electronic Information Labels (EIL, hereinafter referred to as electronic labels) are known, which are attached to store shelves to show information on merchandise displayed in stores. These ElLs communicate with a management server through a relay station. Electronic labels managed by an identical relay station may form a group, and all the electronic information labels are separated into these groups, for each of which merchandise information is updated. In order to reduce power consumption of electronic labels, which are battery-powered, electronic labels are maintained in a sleep mode except for a wake-up period required for information update.

Electronic labels and a relay station communicate with each other according to, for example, the PHY/MAC layer standard defined by the IEEE 802.15.4 standard. The standard defines 16 channels in a band of 2.4GHz. Among the 16 channels, electronic labels and gateways use one channel as a wake-up channel, which is a common channel, and the rest of the channels are assigned for data communication. During a wake-up period, electronic labels listen to communication from a management server, and analyze a received wake-up frame, so that if there is data to be transmitted to an electronic label, the electronic label may tune to a designated channel to receive and store the data. The data includes merchandise information.

The wake-up period and the sleep period may be set for durations, within which real-time information update may be allowed, by considering battery consumption. For example, the wake-up period may be set for 12 ms, and the sleep period may be set for 5 minutes. Depending on display shelves and on the types of displayed merchandise, update frequency of merchandise information may be varied. If a long sleep period is set, update of merchandise information may be delayed, and if a short sleep period is set, battery consumption is increased to cause frequent battery change.

Korean Laid-open Patent Publication No. 2011-0053858 published on May 24, 2011 discloses Electronic Shelf Labels (ESLs) that remains awake according to wake-up setting information received from a server to update information. However, if a wake-up period is set and adjusted for every electronic shelf label, update scheduling may be complicated since a management server is required to notify, to every electronic shelf label, that there is information to be updated. In a case where there are a huge number of electronic labels, a wake-up frame may become longer, making it difficult to transmit all the electronic labels during a short wake-up period. A wake-up period that is adjusted without any regularity makes it difficult for a management server to generate a wake-up frame for every electronic label group and to generate schedules to transmit the generated wake-up frames.

### SUMMARY

Disclosed is an electronic information label system, which enables reduced battery consumption while allowing real-time update of merchandise information.

In addition, in the electronic information label system, a wake-up period for information update may be determined depending on the types of merchandise, or characteristics of display shelves.

Further, in the electronic information label system, a wake-up period for information update may be determined by reflecting different frequency of information update during a period of, for example, a day, a week, or a month.

Moreover, the electronic information label system may guarantee merchandise information update by stable synchronization with a management server.

According to an exemplary embodiment, a wake-up period for information update of electronic labels may be managed by a plurality of modes. A basic mode, which is one of the plurality of modes, may have a fixed period as in the conventional manner. At least one of the plurality of modes may have a different mode from the basic mode.

The basic mode among the plurality of modes may guarantee real-time update of merchandise information as in the conventional manner. Another mode of the plurality of modes is set for products or periods for which there is a prediction of no change in merchandise information, and may include a delayed update mode.

According to an exemplary embodiment, an operation mode of each group of electronic labels may be set for each group, and may be synchronized through a relay station with information included in the electronic labels.

According to another exemplary embodiment, the update setting information may include information that specifies a wake-up time slot, which is a wake-up period during a period of the delayed update mode. In the delayed update mode, a wake-up period may be assigned differently for each of the electronic labels or for each group of the electronic labels.

According to still another exemplary embodiment, merchandise information is updated at a predetermined time interval.

According to yet another exemplary embodiment, operation modes of the electronic labels may be scheduled.

### BRIEF DESCRIPTION OF THE DRAWINGS

FIG. 1 is a diagram illustrating an overall configuration of an electronic information label system according to an exemplary embodiment.
FIG. 2 is a flowchart explaining communications among an electronic label management server, gateways, and electronic labels.
FIG. 3 is a flowchart illustrating a method of controlling electronic labels according to an exemplary embodiment.
FIG. 4 is a flowchart illustrating a method of managing electronic labels according to an exemplary embodiment.
FIG. 5 is a block diagram illustrating an electronic label apparatus according to an exemplary embodiment.
FIG. 6 is a block diagram illustrating an electronic label management server according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

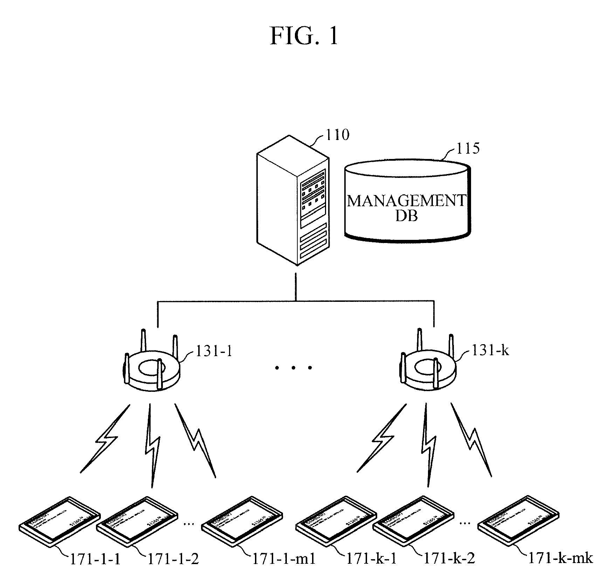

FIG. 1 is a diagram illustrating an overall configuration of an electronic information label system according to an exemplary embodiment. As illustrated in FIG. 1, the electronic label management system according to an exemplary embodiment includes a central server 110, gateways 131 - 1, ... , and 131-k, and electronic labels 171-1-1, 171-1-2, ... , 171-1-ml, 171-k-1, 171-k-2, ... , and 171-k-mk. The electronic label management server 110 is connected to the gateways 131-1, ... , and 131-k through a wired communication. The gateways 131-1, ... , and 131-k communicate with a group of electronic labels included in the gateways through a near field wireless communication, for example, according to the PHY/MAC layer protocol defined by the IEEE 802.15.4 standard. The standard defines 16 channels in a band of 2.4GHz. Among the 16 channels, electronic labels and gateways use one channel as a wake-up channel, which is a common channel, and the rest of the channels are assigned for data communication.

Electronic labels are separated into a plurality of groups, and merchandise information for each of the groups is updated. Electronic labels 171-1-1, 171-1-2, ... , 171-1-ml managed through an identical gateway 131-1 may form a group. In order to reduce power consumption of electronic labels, which are battery-powered, the electronic labels are maintained in a sleep mode except for a wake-up period required for information update. Further, as a display, an electronic paper display (EPD) is used so that an information display state may be maintained even without power supply.

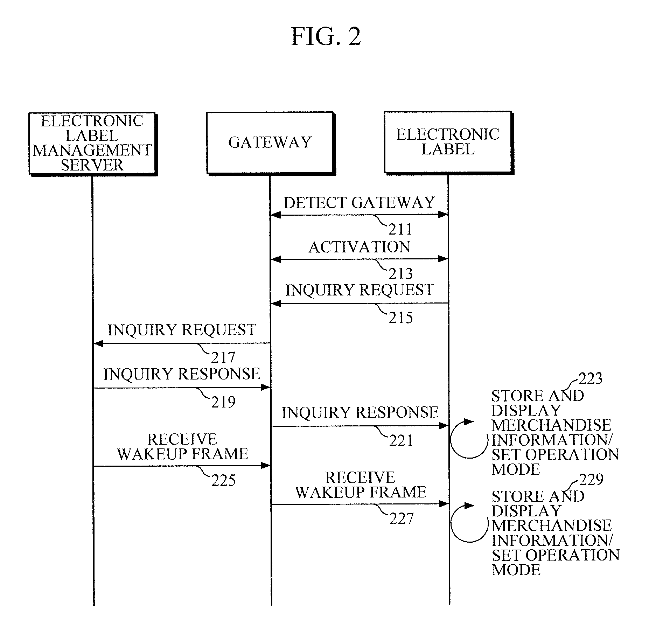

FIG. 2 is a flowchart explaining communications among an electronic label management server, gateways, and electronic labels. As illustrated in FIG. 2, once battery power is applied, electronic labels are forced to be woken up by a remote control for initial registration. For example, a remote control may include an electromagnet that generates a magnetic force when a switch is pressed. The electronic labels include a mechanical switch that is closed by magnetic force of a remote control. Once the switch is closed, interrupt is applied to a microprocessor in a sleep mode, thereby shifting into a wake-up state. The electronic labels shifted into a wake-up state scan for a wake-up channel and detect gateways to form a wireless network in 211. Once gateways are detected, label activation is performed in 213, in which electronic labels register themselves with the detected gateway. Activation is performed by registering, with a management server, identifiers of electronic labels, which are read by barcodes attached thereon, and by registering, with a management server, identifiers of merchandise corresponding to each of the electronic labels, which are read by barcodes of merchandise.

After the initial activation, the electronic labels may receive merchandise information by transmitting and receiving an information inquiry request frame and an information inquiry response frame to and from a data channel, and may display received merchandise information on a display in 215 to 221. In an exemplary embodiment, the received information includes update setting information in addition to merchandise information, in which the update setting information includes information on operation modes, and the electronic labels set operation modes according to update setting information.

In an exemplary embodiment, the electronic labels operate in one of two modes, i.e., a real-time update mode in which merchandise information is updated in real time according to update setting information received from a management server and stored, and a delayed update mode in which merchandise information update is delayed. In an exemplary embodiment, the real-time update mode and the delayed update mode are different in terms of duration of a sleep state. In the real-time update mode, duration of a sleep state may be determined to be a length of time, e.g., 5 minutes, during which real-time update of merchandise information may be guaranteed with battery consumption being reduced to a reasonable level. In the delayed update mode set for merchandise for which information update or an update time may not be estimated, duration of a sleep state is determined with a focus on reducing battery consumption. For example, a sleep state may be maintained for two hours.

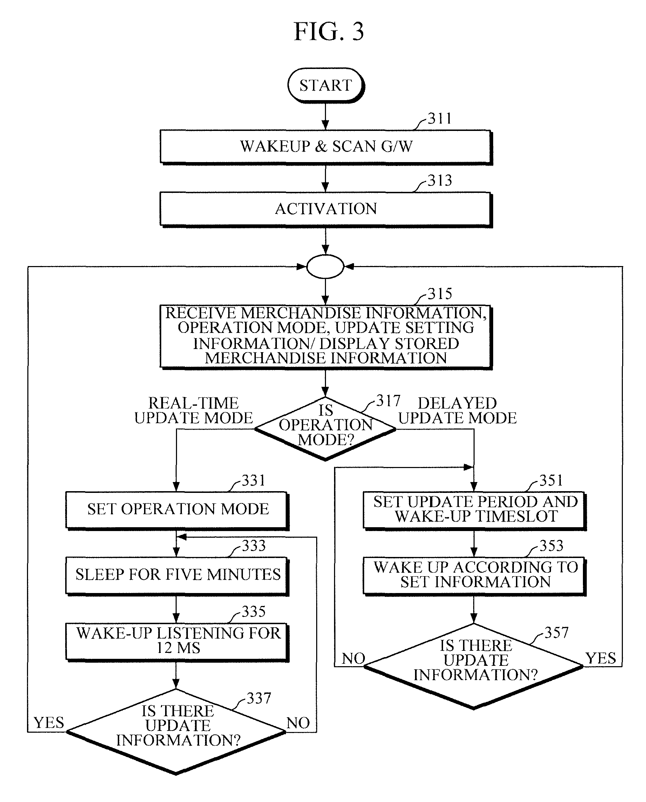

FIG. 3 is a flowchart illustrating a method of controlling electronic labels according to an exemplary embodiment. In an exemplary embodiment, the method of controlling electronic labels may include: checking received information in 353 in which electronic labels stay awake for a period determined according to update setting information to listen to communications from a management server; updating information in 315 in which, if there is data to be received, the data may be received through a designated wireless channel to store the received data in a memory; displaying merchandise information in 315 in which merchandise information included in the received data is displayed; and setting an operation mode in 331 and 351 in which an operation mode is determined between a real-time update mode of updating according to update setting information included in the received data and a delayed update mode.

Referring to FIG. 3, once electronic labels are woken up by, for example, using a remote control after battery power is applied, the electronic labels scan for a wake-up channel and detect gateways to form a wireless network in 311. Once gateways are detected, the electronic labels register themselves with the detected gateways to perform label activation in 313.

After the initial activation, the electronic labels may receive merchandise information by transmitting and receiving an information inquiry request frame and an information inquiry response frame to and from a data channel assigned to the electronic labels, and may display the received merchandise information on a display in 315. In an exemplary embodiment, the received information includes update setting information in addition to merchandise information, in which the update setting information includes information on operation modes, and the electronic labels set operation modes according to the update setting information.

In an exemplary embodiment, the electronic labels operate in one of two modes, i.e., a real-time update mode in which merchandise information is updated in real time according to update setting information received from a management server and stored, and a delayed update mode in which merchandise information update is delayed. In an exemplary embodiment, the real-time update mode and the delayed update mode are different in terms of duration of a sleep state. In the real-time update mode, duration of a sleep state may be determined to be a length of time, e.g. 5 minutes, during which real-time update of merchandise information may be guaranteed with battery consumption being reduced to a reasonable level. In the delayed update mode set for merchandise for which information update or an update time may not be estimated, duration of a sleep state is determined with a focus on reducing battery consumption. For example, a sleep state may be maintained for two hours.

Subsequently, the electronic labels check operation modes in 317. In a case where an operation mode is a real-time update mode, a real-time update mode is performed in a conventional manner. First, an update period is set in 331. In an exemplary embodiment, update setting information may include information on duration of a sleep state or on a wake-up period. Accordingly, the update period may be set in various manners, such as by defining an entire period and a wake-up period, by defining an entire period and duration of a sleep state, by defining a wake-up period or duration of a sleep state, or the like. In an exemplary embodiment of FIG. 3, the wake-up period is set for 12 ms, and duration of a sleep state is set for 5 minutes. These periods may be set properly by considering battery capacity, a number of the entire electronic labels that affect the time required for updating merchandise information of all the electronic labels.

Then, the electronic labels are maintained in a sleep mode for 5 minutes in 333 that is set as the duration of a sleep time. After the sleep time, the state of the electronic labels is shifted into a wake-up mode in 335. While being in the wake-up mode, the electronic labels perform wake-up listening. If electronic labels find their group identification (ID) number in a received wake-up frame, but a message ID number is the same or smaller than a previously stored ID number, the message is determined to have been received, and the electronic labels are shifted into a sleep mode. If electronic labels fail to find their group ID number, it is determined that there is no message to be received, and the electronic labels are shifted into a sleep mode again. Further, if electronic labels fine their group ID number in a received wake-up frame, but a message ID number is different from a previously stored ID number, the electronic labels determine that there is update information to be received in 337.

If there is update information, the update information is received by returning to 315. The update information may be merchandise information, or update setting information.

Upon checking an operation mode, if an operation mode is a delayed update mode, an update period may be set for the mode in 351. For example, a wake-up period may be set for 12 ms, and duration of a sleep time may be set for 2 hours. In an exemplary embodiment, an update period of the delayed update mode may be predetermined in a system. In another exemplary embodiment, update setting information may include information on duration of a sleep mode, or on a wake-up period, in which an update period of the delayed update mode may be determined by a management server according to each group of electronic labels. The update period may be set in various manners, such as by defining an entire period and a wake-up period, by defining an entire period and duration of a sleep state, by defining a wake-up period or duration of a sleep state, or the like.

In another exemplary embodiment, update setting information may include information that specifies a wake-up time slot, which is a wake-up period during a period of the delayed update mode. In this case, all the electronic labels have the same update period, e.g., an update period of two hours. Wake-up time slots are assigned differently according to each group of electronic labels. Electronic labels in the same group wake up in the same time slot to listen to communications from gateways. A wake-up frame is transmitted in different time slots between gateways, thereby avoiding interference of communications between gateways or groups.

In another exemplary embodiment, update setting information may include information on schedule of shifting operation modes. For example, operation modes may be scheduled as follows.

**[Table 1]**

| Time | Operation mode |
|---|---|
| 10:00 | Real-time update mode |
| 11:00 | Delayed update mode |
| 17:00 | Real-time update mode |
| 20:00 | Delayed update mode |
| 24:00 | Real-time update mode |
| 01:00 | Delayed update mode |

As shown in Table 1 above, a real-time update mode is set for 10:00-11:00, which is an opening time when products are newly displayed, for 17:00-20:00 when products are sold at a discount price, and for 24:00-01:00 when overall update of merchandise information is performed. The rest is scheduled to be a delayed update mode. Such scheduling may be set at a time interval of one week, one month, or one year.

In another exemplary embodiment, merchandise information of electronic labels is controlled to be updated at a predetermined time interval. Electronic labels are connected to a server at a predetermined time interval for refresh required to maintain electronic paper display data or for synchronization of an internal clock. Such time interval may be, for example, 24 hours. Even in a case where there is no merchandise information to be updated, a management server transmits merchandise information to each group of electronic labels to control the electronic labels to refresh display data at a predetermined time interval, for example, once every 24 hours. Electronic labels may refresh display data by specifying identifiers of each group of electronic labels in a wake-up frame and assigning new message identifiers, and by transmitting an inquiry response message that includes identical merchandise information in response to receiving an inquiry request message.

Alternatively, regardless of the control of a management server, electronic labels may refresh display data once every 24 hours by controlling a clock or a timer. In this case, the electronic labels wake up once every 24 hours, and may refresh an electronic paper display to display again display images stored in a memory.

In an exemplary embodiment, in response to a request for information update of electronic labels, an electronic label management server operates in one of two operation modes, i.e., a real-time update mode in which merchandise information is updated in real time according to update setting information of electronic labels, and a delayed update mode in which update of merchandise information is delayed; notifies that there is merchandise information to be updated during a wake-up period; and transmits merchandise information to be updated to electronic labels that respond.

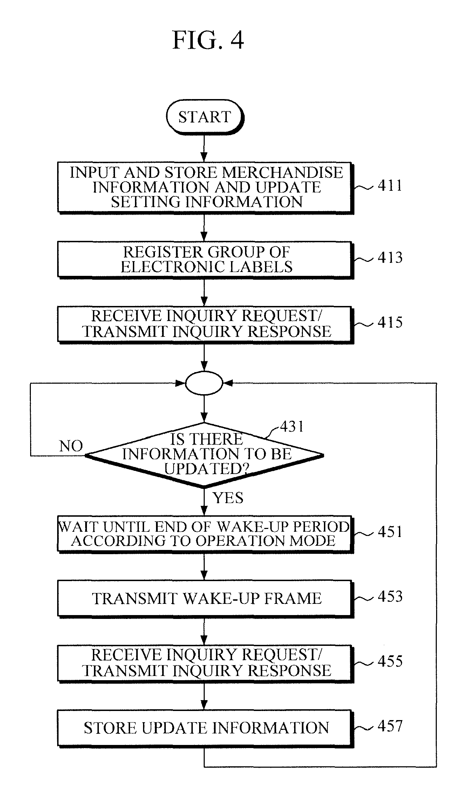

FIG. 4 is a flowchart illustrating a method of managing electronic labels according to an exemplary embodiment. Referring to FIG. 4, a manager first inputs merchandise information to an electronic label management server, and sets update setting information for each of the electronic labels in 411. For example, an initial operation mode of all the electronic labels may be set as a real-time update mode, which is a basic mode.

Once power is applied, the electronic labels are woken up to be activated by registration with gateways. An electronic label management server registers groups of electronic labels for each gateway in 413. Then, in response to receiving, from registered groups of electronic labels, inquiry request frames in data channels assigned to the groups, the management server transmits inquiry response frames in 415, thereby transmitting merchandise information to be displayed and update setting information for each of the electronic labels.

Electronic labels receive and display merchandise information. In an exemplary embodiment, a management server may transmit to the electronic labels merchandise information as well as update setting information. The update setting information may include information on operation modes, and electronic labels may set operation modes according to the update setting information in 415.

In an exemplary embodiment, in response to a request for information update of electronic labels, a method of managing the electronic labels may include: transmitting a request for update in 453 that includes operating in one of two operation modes, i.e., a real-time update mode in which merchandise information is updated in real time according to update setting information of electronic labels, and a delayed update mode in which update of merchandise information is delayed, and notifying that there is merchandise information to be updated during a wake-up period; updating information in 455 that includes transmitting data to be updated to electronic labels that respond through a designated wireless channel, and checking whether the data is received; and update setting in 457 that includes updating update setting information included in the transmitted data as new update setting information and storing the new update setting information.

In an exemplary embodiment, update setting information may be transmitted during a wake-up period, set for each group of electronic labels, determined according to update setting information. For example, in a case where there is information to be updated as a manager changes merchandise information or update setting information of a specific group of electronic labels in 431, a management server waits until the end of a wake-up period in an operation mode set for the group of electronic labels in 451. In an exemplary embodiment, update setting information may include information on duration of a sleep time, or on a wake-up period. In an exemplary embodiment, internal clocks of a management server and electronic labels are synchronized. For example, in accordance with a wake-up period of 12 ms, the management server transmits a wake-up frame in 453. The wake-up frame includes a message identifier of information to be updated, a group identifier of electronic labels to be updated, and specific information of data channels to which the information to be updated is to be transmitted.

Upon receiving a wake-up frame in a wake-up channel, electronic labels are connected to a data channel to transmit an inquiry request message, and in response to the request, the management server transmits an inquiry response message in 455. The inquiry response message may include merchandise information to be updated and/or update setting information. Upon receiving from a group of electronic labels a message indicating that the electronic labels have received the inquiry response message, the management server determines that update information is to be transmitted to the electronic labels, and stores the update setting information in 457.

In another exemplary embodiment, update setting information may include information that specifies a wake-up time slot, which is a wake-up period during a period of the delayed update mode. A wake-up frame is transmitted in different time slots according to each group of electronic labels.

In still another exemplary embodiment, update setting information may include information on schedule of shifting operation modes. Such scheduling may be set as a period of one week, one month, or one year.

In still another exemplary embodiment, a management server controls merchandise information of electronic labels to be updated at a predetermined time interval. The time interval may be, for example, 24 hours. Even in a case where there is no merchandise information to be updated, a management server transmits merchandise information to each group of electronic labels to control the electronic labels to refresh display data at a predetermined time interval, for example, once every 24 hours. Electronic labels may refresh display data by specifying identifiers of each group of electronic labels in a wake-up frame and assigning new message identifiers, and by transmitting an inquiry response message that includes identical merchandise information in response to receiving an inquiry request message.

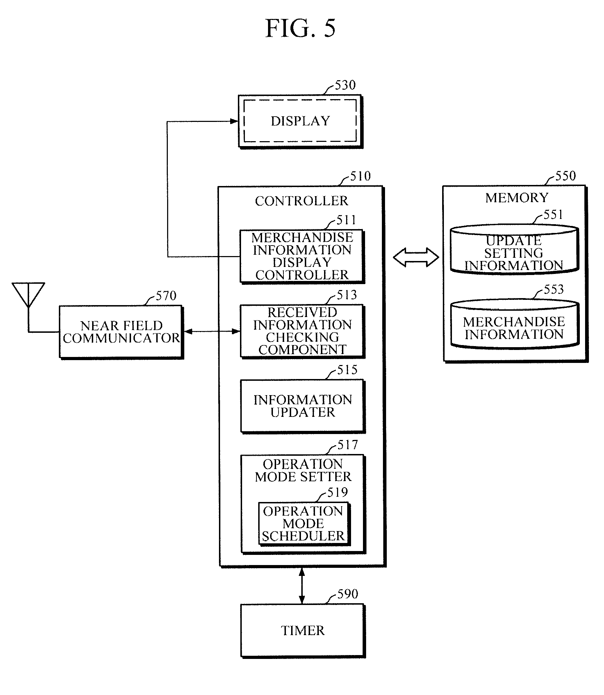

FIG. 5 is a block diagram illustrating an electronic label apparatus according to an exemplary embodiment. In the electronic information label system, electronic labels are attached to store shelves to show information on displayed merchandise. According to an exemplary embodiment, the electronic labels are managed in a plurality of groups. In a case where there are a huge number of groups or groups are stretched to a wide area, merchandise information for each of the groups may be updated through a plurality of relay stations. By using relay stations installed in a store ceiling, merchandise information may be synchronized between each of the electronic labels and a management server.

As illustrated in FIG. 5, the electronic information label system includes a display 530, a near field communicator 570, and a memory 550. In an exemplary embodiment, the display 530 is an electronic paper display. For example, the display 530 may be an electronic paper display based on a electrophoresis technique. The electronic paper display may maintain an information display state even without power supply, and may consume low power with a wide viewing angle. However, the present disclosure is not limited thereto, and may adopt various known displays. In an exemplary embodiment, the near field communicator 570 may communicate with a relay station in a ZigBee method. Like a Bluetooth communication method, the ZigBee communication defines MAC based on the IEEE 802.15 standard, and is a near field, low speed communication standard with low power consumption and excellent security. However, the present disclosure is not limited to the ZigBee communication method, and may include various near field communication methods, such as a Bluetooth communication method, or a method adopting only a part of the ZigBee communication standard.

In an exemplary embodiment, the memory 550 may be a flash memory that may consume low power, and may maintain data even without power supply. However, the present disclosure is not limited thereto, and may adopt other memory appropriately among known semiconductor memories.

In an exemplary embodiment, the controller 10 is a microprocessor. In an exemplary embodiment, an integrated circuit chip is used in which operation control circuits of the controller 510, the near field communicator 570, the memory 550, a timer 590 and a the display are all mounted. However, the present disclosure is not limited to the configuration, and various system configurations, such as hardware for exclusive use, gate array, individual semiconductor device, and the like, may be applied to hardware.

The controller 510 may execute programs stored in the memory 550, for example, a program for operating a whole system, or applications. In an exemplary embodiment, merchandise information display controller 511, a received information checking component 513, an information updater 515, an operation mode setter 517, and the like may be implemented by these applications. However, in view of a current system technology, it is evident that these components may be implemented by combinations of software/hardware, or by hardware alone, such as a logic for exclusive use or the like.

In an exemplary embodiment, the controller 510 may listen to communications from a management server through the near field communicator 570 during a wake-up period. If there is data to be received, the controller 510 receives the data, and stores the received data in the memory 550, in which the controller 510 operates in one of two modes, i.e., a real-time update mode in which merchandise information is updated in real time according to update setting information received from a management server and stored, and a delayed update mode in which merchandise information update is delayed.

In an exemplary embodiment, the received information checking component 513 stays awake during a period determined according to the update setting information 551 stored in the memory 550 to listen to communications from a management server, and outputs data channel information to the information updater 515 if there is data to be received. If electronic labels find their group identification (ID) number in a received wake-up frame, but a message ID number is the same or smaller than a previously stored ID number, the message is determined to have been received, and the electronic labels are shifted into a sleep mode. Further, if electronic labels fine their group ID number in a received wake-up frame received from gateways through the near field communicator 570, but a message ID number is different from a previously stored ID number, the electronic labels determine that there is update information to be received. The information updater 515 is connected to a data channel designated by the near field communicator 570 to receive update setting information from a management server and store the information in the memory 550. Data is received to be stored as the update setting information 551 in the memory, or the update setting information 551 itself is updated.

In an exemplary embodiment, the information updater 515 stores update setting information received from the near field communicator 570 in a memory as the update setting information 551. In the present disclosure, "update setting information" refer to information required for electronic labels to update information with a management server through a relay station, and may include, for example, information update period, duration of a sleep mode, or information on schedule of information update.

In an exemplary embodiment, the information updater 515 programs the timer 590, so that according to update setting information received by the timer 590, the microprocessor 510 included in a controller may be controlled to generate interrupt. In an exemplary embodiment, the timer 590 includes two timer channels for a wake-up start time and a sleep-mode start time. Once the timer 590 generates a first interrupt, the controller 510 is branched by executing an information update routine, to listen to communications from a management server to check whether there is data to be received, which includes update setting information or information on new merchandise items. Once the timer 590 generates a second interrupt, the controller 510 enters a sleep mode to turn off power of all the peripheral devices except for the timer 590, and enters a waiting mode.

However, the present disclosure is not limited thereto, and the timer 590 may include only one channel for a wake-up start time, in which in response to an occurrence of a time event, it is checked, by listening to a communication channel, whether there is data to be received, and after a lapse of a predetermined time, a sleep mode is started. In another example, without using a timer, only the operations of the controller 510 may be used.

In another exemplary embodiment, the information updater 515 may store merchandise information received from the near field communicator 570 in the memory 550 as merchandise information data 553. The merchandise information may include, for example, information on price of products, a monetary unit, a discount rate, special offer products /cut-price products, and the like, which are to be displayed on the display 530, and may further include information to control display of merchandise information. In an exemplary embodiment, in a case where there is updated merchandise information, the merchandise information display controller 511 may display the information on the display 530. In an exemplary embodiment, the merchandise information controller 511 may display updated information, and then may turn off power of the display 530.

The operation mode setter 517 may set an operation mode between a real-time setting mode in which merchandise information is updated in real time according to update setting information included in received data, and a delayed update mode in which update of merchandise information is delayed. For example, in the real-time update mode, a wake-up period is set for 12 ms, and duration of a sleep mode is set for 5 minutes. In another example, in the delayed update mode, a wake-up period is set for 12 ms, and duration of a sleep mode is set for 2 hours.

In an exemplary embodiment, the operation mode setter 517 may include an operation mode scheduler 519 that shifts operation modes according to scheduling information of operation modes stored as part of update setting information. The operation mode scheduler 519 checks the timer 590 to shift operation modes according to scheduling information stored in the update setting information 551.

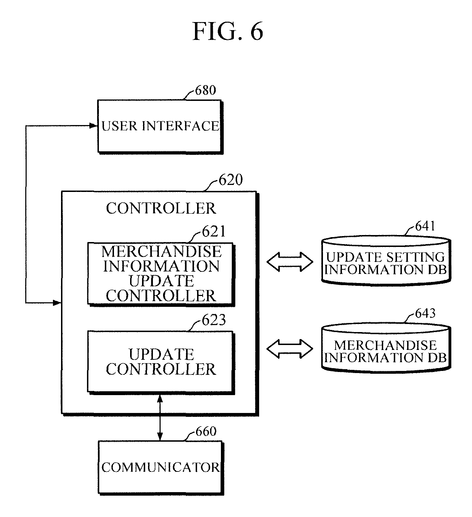

FIG. 6 is a block diagram illustrating an electronic label management server according to an exemplary embodiment. A management server may be implemented as a program, for example, in a server computer. The management server may be connected through a network to other store management server, for example, a point of sale (POS) server, or a coupon management server, and may be operated in conjunction therewith. The server computer may include a communicator 600 that communicates with a plurality of relay stations through a wired or wireless Internet.

In an exemplary embodiment, an update controller 623 that controls update setting information in a management server (hereinafter referred to as the update controller 623) provides a graphic user interface through a user interface 680, through which update setting information for each group of electronic labels may be input from a user to be stored in an update setting information database 461. For example, store shelves may be displayed on a store map, merchandise information may be displayed for each group of electronic labels with one or more store shelves, and groups of electronic labels of each shelf may be separated by different colors or by boundary lines. A store map that is not illustrated may be pre-stored in a memory or may be received from a store management server. Merchandise information for each shelf may be read from the merchandise information database 643. A manager may select each group of electronic labels on this screen, and may input update setting information.

In another example, update setting information for each store may be input as schedules in a form of table. For example, an update mode of each group during a one-day period may be input in a form of table, and the update controller 623 may store the table in the database 641, and transmit the data to each group of electronic labels.

In a case where merchandise information is changed in the merchandise information database 643, or a manager changes merchandise information through the user interface 680, the merchandise information update controller 621 generates images that display changed merchandise information, and transmits the images to the each group of electronic labels.

By controlling information update according to the types of merchandise or characteristics of display shelves, merchandise information may be updated in real time at a necessary point in time with a longer battery change period. Moreover, by reflecting different frequency of information update during a period of, for example, a day, a week, a month, or a year, a wake-up period of electronic labels may be managed efficiently. Further, merchandise information update may be guaranteed through stable synchronization with a management server.

The methods and/or operations described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A method of managing electronic labels that operates in one of two operation modes between a real-time update mode in which merchandise information is updated in real time according to update setting information received from a management server and stored, and a delayed update mode in which merchandise information update is delayed.

2. The method of claim 1, comprising:
checking received information wherein electronic labels wake up during a period determined according to update setting information to listen to communications from a management server;
updating information wherein, if there is data to be received, the data may be received through a designated wireless channel to store the received data in a memory;
displaying merchandise information wherein merchandise information included in the received data is displayed; and
setting an operation mode wherein an operation mode is determined between a real-time update mode of updating according to update setting information included in the received data and a delayed update mode.

3. The method of claim 1, wherein the update setting information includes duration of a sleep state or a wake-up period.

4. The method of claim 1, wherein the update setting information includes information that specifies a wake-up time slot, which is a wake-up period during a period of the delayed update mode.

5. The method of claim 1, wherein the update setting information includes information on schedule of shifting operation modes.

6. The method of claim 1, wherein merchandise information is updated at a predetermined time interval.

7. An electronic label in which a program implemented by the method of claim 1 is mounted to be executed.

8. A method of managing electronic labels that are executable in a management server that manage a plurality of electronic labels,
wherein in response to a request for information update of the electronic labels, the management server is configured to:
operate in one of two operation modes between a real-time update mode in which merchandise information is updated in real time according to update setting information of electronic labels, and a delayed update mode in which update of merchandise information is delayed;
notify that there is merchandise information to be updated during a wake-up period; and
transmit merchandise information to be updated to electronic labels that respond.

9. The method of claim 1, comprising:
transmitting a request for update that comprises operating in one of two operation modes, between a real-time update mode in which merchandise information is updated in real time according to update setting information of electronic labels, and a delayed update mode in which update of merchandise information is delayed, and notifying that there is merchandise information to be updated during a wake-up period;
updating information that comprises transmitting data to be updated to electronic labels that respond through a designated wireless channel, and checking whether the data is received; and
update setting that comprises updating update setting information included in the transmitted data as new update setting information and storing the new update setting information.

10. The method of claim 8, wherein the update setting information is transmitted with merchandise information to each group of electronic labels.

11. The method of claim 8, wherein merchandise information is updated for all the electronic labels at a predetermined time interval.

12. The method of claim 8, wherein the update setting information includes duration of a sleep state or a wake-up period.

13. The method of claim 8, wherein the update setting information includes information on schedule of shifting operation modes.

14. The method of claim 8, wherein the update setting information is transmitted during each wake-up period of the electronic labels, which is determined according to the update setting information.

15. A non-temporary storage medium in which a computer program implemented by the management method of claim 8 is stored.
